# EUROPEAN PATENT SPECIFICATION

(11) **EP 4 437 846 B1**
(45) Date of publication and mention of the grant of the patent: **12.08.2026**
(21) Application number: 22898211.2
(22) Date of filing: 16.09.2022
(51) Int. Cl.: H02K 49/10, A01K 89/015

(54) **REEL DEVICE**
HASPELVORRICHTUNG
DISPOSITIF DE MOULINET

(30) Priority: 24.11.2021 JP 2021189802
(43) Date of publication of application: 02.10.2024
(73) Proprietor: Sumitomo Heavy Industries, Ltd., Tokyo 141-6025 (JP)
(72) Inventor: YAMAMOTO, Taizo, Yokosuka-shi, Kanagawa 237-8555 (JP)
(74) Representative: Louis Pöhlau Lohrentz
(86) International application number: PCT/JP2022/034662
(87) International publication number: WO 2023/095426

(56) References cited:
- CN-A- 108 935 361
- CN-U- 205 161 638
- CN-U- 212 306 564
- JP-A- 2004 033 024
- JP-A- 2004 081 114
- JP-A- 2004 081 114
- JP-A- 2004 173 516
- JP-A- 2014 161 162
- JP-A- 2016 214 123
- JP-A- 2016 214 123
- JP-U- 3 120 657
- JP-U- S58 117 866
- JP-U- S6 375 172
- US-A- 3 378 710

## Description

### Technical Field

The present invention relates to a reel device.

### Background Art

In a conventional reel device such as a so-called double bearing reel, a handle rotated by a user and a spool for winding a fishing line are connected to each other by a mechanical speed change mechanism (torque transmission mechanism) (for example, refer to PTLs 1 to 3).

Moreover, it is known to apply a magnetic brake (see PTL 4) or a magnetic mechanism for line alignment (see PTL 5) in a reel device.

### Citation List

### Patent Literature

[PTL 1] Japanese Unexamined Patent Publication No. 2018-113918
[PTL 2] Japanese Unexamined Patent Publication No. 2022-98036
[PTL 3] Japanese Unexamined Patent Publication No. 2022-108840
[PTL 4] Chinese Utility Model No. CN 205 161 638 U
[PTL 5] Chinese Utility Model No. CN 212306564 U

### Summary of Invention

### Technical Problem

However, with the mechanical (contact-type) torque transmission mechanism, power loss at a contact portion or a change in characteristics due to a contact state occurs. In order to suppress these issues, significant effort is required, such as cleaning gear parts, applying grease, replacing parts, and adjusting a drag force.

The present invention has been made in view of the above-described circumstances, and an object of the present invention is to suitably transmit a rotation torque.

### Solution to Problem

The aforementioned objective is achieved by a double bearing reel for fishing according to claim 1, including:
a rotation input portion to which a rotation force is input;
a line winding portion that is rotatably supported and around which a line-like body is wound; and
a speed change mechanism that is capable of transmitting the rotation force input to the rotation input portion to the line winding portion by changing a speed through magnetic modulation.

### Advantageous Effects of Invention

According to the present invention, a rotation torque can be suitably transmitted.

### Brief Description of Drawings

Fig. 1 is a cross-sectional view schematically showing a reel device according to an embodiment.
Fig. 2 is a sectional view of a speed change mechanism taken along line II-II of Fig. 1.
Fig. 3A is a schematic side view showing a clutch in a connected state.
Fig. 3B is a diagram showing a facing state of magnets in the clutch in the connected state.
Fig. 4A is a schematic side view showing the clutch in a disconnected state.
Fig. 4B is a diagram showing a facing state of the magnets in the clutch in the disconnected state.
Fig. 5A is a diagram illustrating an operation of the reel device according to the embodiment.
Fig. 5B is a diagram illustrating an operation of the reel device according to the embodiment.
Fig. 5C is a diagram illustrating an operation of the reel device according to the embodiment.
Fig. 6 is a cross-sectional view schematically showing a reel device according to a first modification example of the embodiment.
Fig. 7A is a diagram illustrating an operation of the reel device according to the first modification example of the embodiment.
Fig. 7B is a diagram illustrating an operation of the reel device according to the first modification example of the embodiment.
Fig. 8A is a diagram showing a slip torque (step-out torque) waveform example of an outer rotor, an inner rotor, and a stator in a case where the stator is forcibly rotated.
Fig. 8B is a diagram in which torque peak values in a case where the stator is forcibly rotated are compared with each other.
Fig. 9 is a cross-sectional view schematically showing a reel device according to a second modification example of the embodiment.
Fig. 10A is a diagram illustrating an operation of the reel device according to the second modification example of the embodiment.
Fig. 10B is a diagram illustrating an operation of the reel device according to the second modification example of the embodiment.
Fig. 10C is a diagram illustrating an operation of the reel device according to the second modification example of the embodiment.
Fig. 11 is a cross-sectional view schematically showing a reel device according to a third modification example of the embodiment.
Fig. 12 is a cross-sectional view schematically showing a modification example of the reel device according to the third modification example of the embodiment.

### Description of Embodiments

Hereinafter, an embodiment of the present invention will be described in detail with reference to the drawings.

### [Entire Configuration of Reel Device]

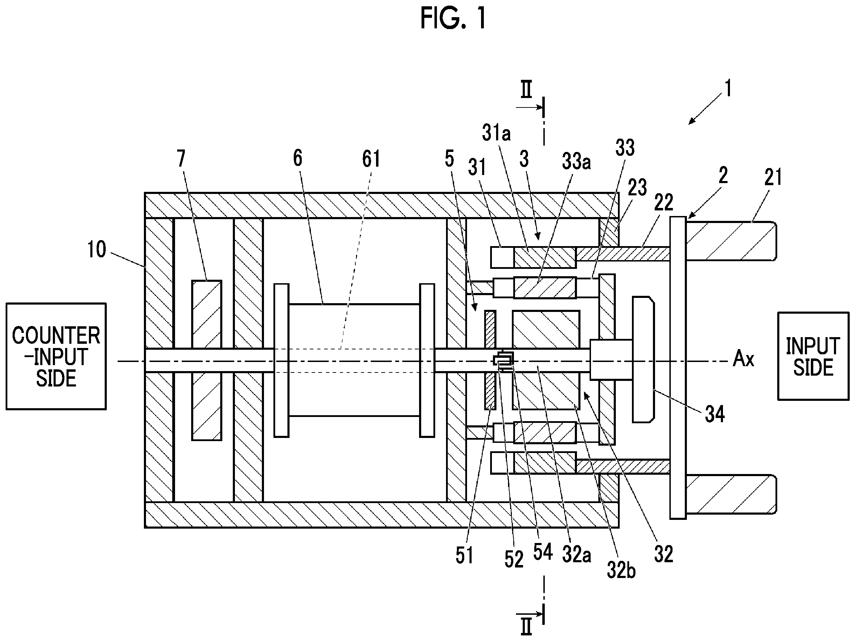

Fig. 1 is a cross-sectional view schematically showing a reel device 1 according to the present embodiment.

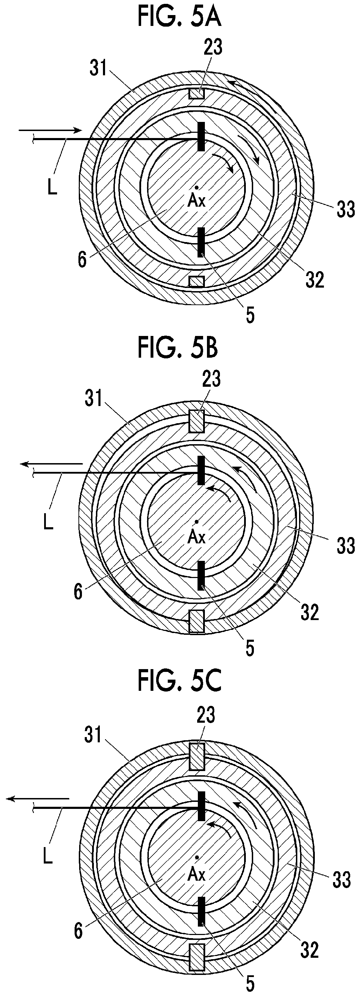

As shown in the drawing, the reel device 1 according to the present embodiment is a bait reel for fishing. Specifically, the reel device 1 includes a handle 2 to which a rotation force is input by a user, a speed change mechanism 3 that is capable of outputting the rotation force input to the handle 2 by changing a speed, a clutch 5 that switches a torque transmission state from the speed change mechanism 3 to a spool 6, and the spool 6 around which a fishing line L (refer to Fig. 5A and the like) is wound. The handle 2, the speed change mechanism 3, the clutch 5, and the spool 6 are supported by a frame (body) 10.

### [Handle]

The handle 2 includes a grip 21 that is gripped by the user, and an arm 22 that includes one end provided with the grip 21 and the other end connected to the speed change mechanism 3. The arm 22 is supported by the frame 10 to be rotatable around a center axis Ax, via a one-way clutch 23. The one-way clutch 23 rotates the handle 2 only in one direction corresponding to a direction in which the spool 6 winds the fishing line L.

In the following description, a direction along the center axis Ax is referred to as an "axial direction", a direction perpendicular to the center axis Ax is referred to as a "radial direction", and a rotation direction centered on the center axis Ax is referred to as a "circumferential direction". In addition, in the axial direction, a side (right side in Fig. 1) on which the handle 2 is disposed is referred to as an "input side", and an opposite side (left side in Fig. 1) to the input side is referred to as a "counter-input side".

### [Spool]

The spool 6 is formed in a substantially cylindrical shape along the axial direction, and the fishing line (line) L is wound around an outer peripheral surface thereof. The spool 6 is supported by the frame 10 to be rotatable around the center axis Ax, via a spool shaft 61 that is integrally formed, and the spool 6 winds and unwinds the fishing line L through the rotation.

A brake 7 is provided on a side opposite to the clutch 5 in the axial direction of the spool 6. The brake 7 is connected to the spool shaft 61 and applies a braking force to the spool 6 via the spool shaft 61. The brake 7 applies a braking force corresponding to a rotational speed of the spool 6 to the spool 6 to suppress backlash or stabilize the cast. As such a brake 7, for example, conventionally known techniques, such as a centrifugal brake or a magnetic brake, can be applied.

### [Speed Change Mechanism]

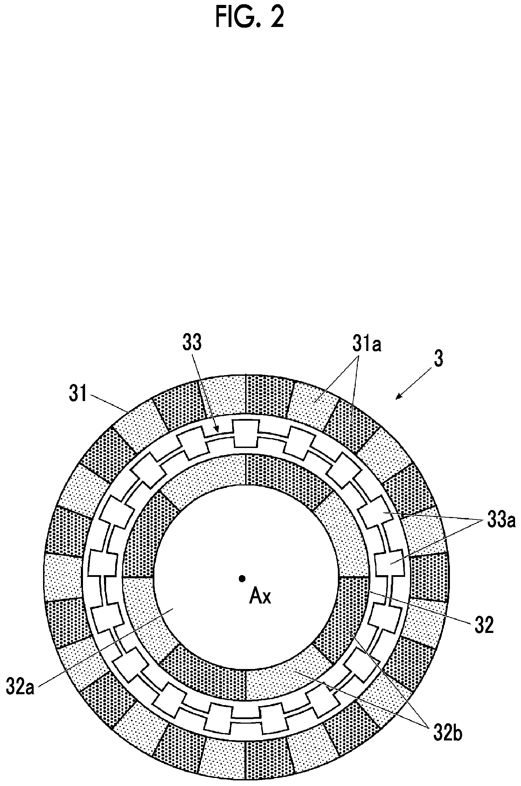

Fig. 2 is a diagram illustrating a structure of the speed change mechanism 3 and is a sectional view of the speed change mechanism 3 taken along line II-II of Fig. 1.

As shown in Figs. 1 and 2, the speed change mechanism 3 is disposed between the handle 2 and the spool 6 and is capable of transmitting the rotation force input to the handle 2 to the spool 6 by changing a speed through magnetic modulation. Specifically, the speed change mechanism 3 is a magnetic modulation gear and includes an outer rotor (input shaft) 31, an inner rotor (output shaft) 32, and a stator 33.

The outer rotor 31 is formed in a substantially cylindrical shape centered on the center axis Ax and includes outer pole magnets 31a. The outer pole magnets 31a are, for example, permanent magnets such as neodymium magnets, and a plurality of magnets having different polarities are alternately disposed in the circumferential direction. The arm 22 of the handle 2 is connected to an end portion of the outer rotor 31 on the input side in the axial direction, and the rotation force is input from the handle 2 to the outer rotor 31. The outer rotor 31 may include a yoke or the like that supports the outer pole magnets 31a. In addition, the outer pole magnets 31a may have an integral ring shape or may have a shape in which divided outer pole magnets are arranged in the circumferential direction.

The inner rotor 32 is concentrically disposed on an inner diameter side of the outer rotor 31 and includes a shaft 32a and inner pole magnets 32b. The spool 6 (spool shaft 61) is connected to the counter-input side of the inner rotor 32 via the clutch 5. The shaft 32a is supported to be rotatable around the center axis Ax. The inner pole magnets 32b are, for example, permanent magnets such as neodymium magnets, have a smaller number of poles than that of the outer pole magnets 31a of the outer rotor 31, and are attached to an outer peripheral surface of the shaft 32a such that a plurality of magnets having different polarities are alternately disposed in the circumferential direction. The inner pole magnets 32b may have an integral ring shape or may have a shape in which divided inner pole magnets are arranged in the circumferential direction.

In addition, the inner rotor 32 is configured such that the inner pole magnets 32b are movable in the axial direction, and an axial position of the inner pole magnets 32b is adjustable by a drag screw 34. The drag screw 34 is disposed outside the frame 10 and is connected to the input side of the inner rotor 32. The drag screw 34 is supported by the frame 10 with, for example, a ball screw and is configured to move the inner pole magnets 32b in the axial direction with rotation. The inner rotor 32 may be configured such that only the inner pole magnets 32b move without moving the shaft 32a, or may be configured such that the shaft 32a moves together with the inner pole magnets 32b, as long as the inner pole magnets 32b are movable in the axial direction.

The stator 33 is formed in a substantially cylindrical shape and is disposed concentrically with the outer rotor 31 and the inner rotor 32 at a radial position between the outer rotor 31 and the inner rotor 32. Both end portions of the stator 33 in the axial direction are fixed to the frame (body) 10. The stator 33 includes magnetic pole pieces (pole pieces) 33a disposed on an outer diameter side of the inner pole magnets 32b.

The magnetic pole pieces 33a are formed of laminated steel sheets, and a plurality of magnetic pole pieces are disposed at predetermined intervals in the circumferential direction. The number of the magnetic pole pieces 33a is the number of outer magnetic pole pairs (the number of pole pairs of the outer pole magnets 31a) ± the number of inner magnetic pole pairs (the number of pole pairs of the inner pole magnets 32b) and is typically the number of outer magnetic pole pairs + the number of inner magnetic pole pairs. Two magnetic pole pieces 33a adjacent to each other in the circumferential direction may be connected by a thin connecting portion, may be connected by a non-magnetic body, or may not be connected. Fig. 2 shows an example in which two magnetic pole pieces 33a adjacent to each other are connected at an intermediate position in the radial direction. In addition, the magnetic pole piece 33a need not be formed of a laminated steel sheet as long as it is a magnetic body, and may be a block of a steel material (an SS material, an SPCC material, or the like) as long as it is simply operated.

In the speed change mechanism 3 having the above configuration, when rotation is input to the outer rotor 31, the spatial magnetic flux waveform of the outer pole magnets 31a of the outer rotor 31 is modulated to the same frequency as the inner pole magnets 32b of the inner rotor 32 by the magnetic pole pieces 33a of the stator 33, and the torque is transmitted to the inner rotor 32 by using a magnetic force between the magnetic pole pieces 33a and the inner pole magnets 32b. That is, in the speed change mechanism 3, power transmission is performed from the outer rotor 31 to the inner rotor 32 by the modulated magnetic flux. In this case, a gear ratio is the number of outer pole pairs/ the number of inner pole pairs (the rotations are in opposite directions).

### [Clutch]

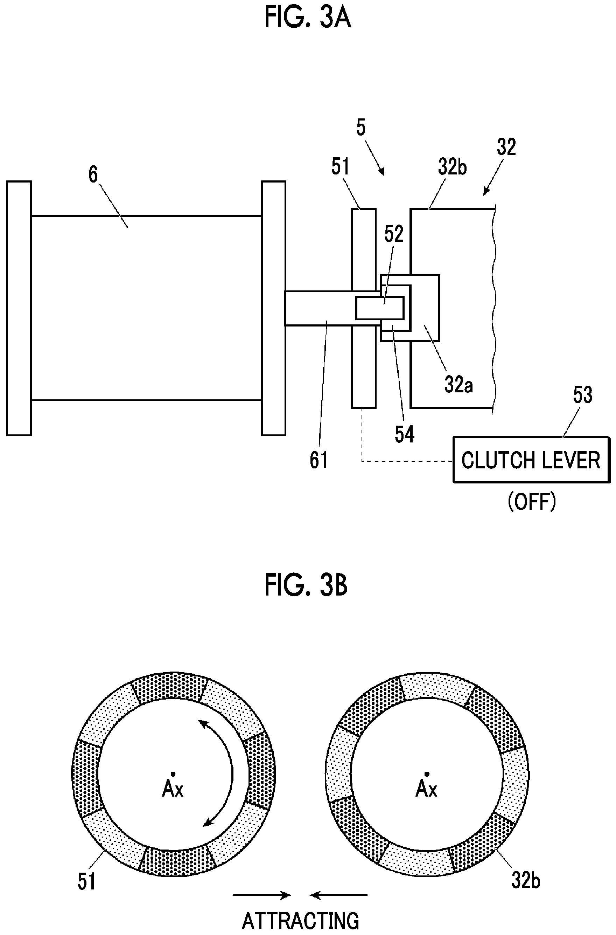

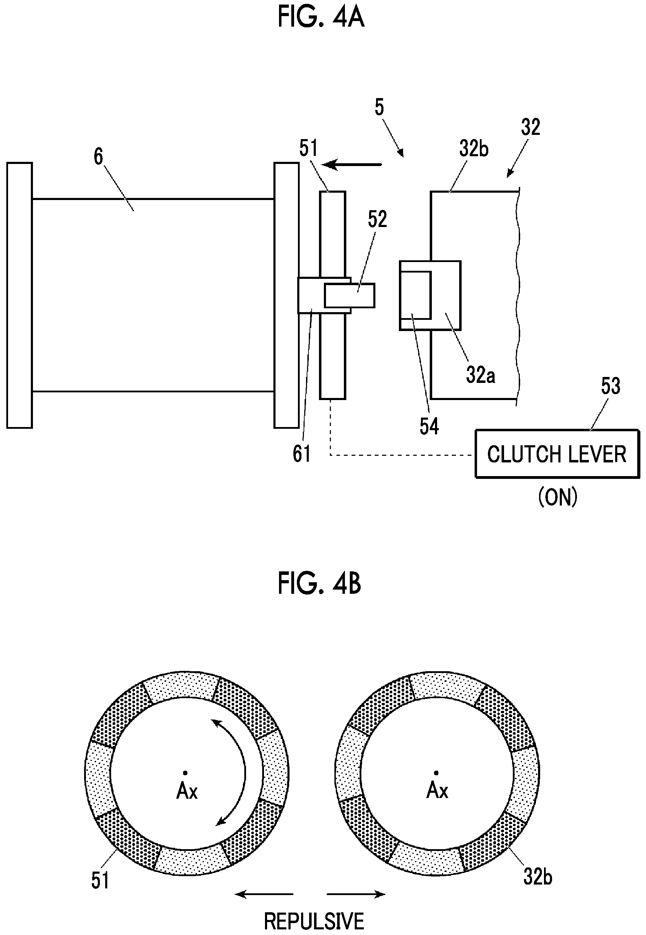

Fig. 3A is a schematic side view showing the clutch 5 in a connected state, and Fig. 3B is a diagram showing a facing state of the magnets in the clutch 5 in the connected state. Fig. 4A is a schematic side view showing the clutch 5 in a disconnected state, and Fig. 4B is a diagram showing a facing state of the magnets in the clutch 5 in the disconnected state.

The clutch 5 is disposed between the speed change mechanism 3 and the spool 6 and is capable of switching a torque transmission state between the speed change mechanism 3 and the spool 6 to a state in which the rotation force is transmitted and a state in which the rotation force is not transmitted. That is, the clutch 5 switches the speed change mechanism 3 and the spool 6 to the connected state in which the speed change mechanism 3 and the spool 6 are connected, and the disconnected state in which the connection is released.

Specifically, the clutch 5 includes clutch magnets 51 and a key member 52.

The clutch magnets 51 are formed in a disc-like shape centered on the center axis Ax and are provided at an end portion of the spool shaft 61 on the input side. Specifically, the clutch magnets 51 are configured to have the same inner and outer diameter sizes and the same polarity dispositions as the inner pole magnets 32b and are disposed to face an end surface of the inner pole magnets 32b on the counter-input side in the axial direction. That is, the clutch magnets 51 have the same number of poles as the inner pole magnets 32b, and a plurality of magnets having different polarities are alternately disposed in the circumferential direction.

In addition, the clutch magnets 51 are supported to be rotatable around the center axis Ax and are connected to a clutch lever 53 attached to the frame 10. The clutch lever 53 rotates the clutch magnets 51 around the center axis Ax by one pole pitch such that the polarity positions of the clutch magnets 51 in the circumferential direction are reversed, in response to the operation of the clutch lever 53. In the rotation of the clutch magnets 51 by the clutch lever 53, the clutch magnets 51 may be rotated integrally with the spool shaft 61, or only the clutch magnets 51 may be rotated.

The key member 52 is provided at the end portion of the spool shaft 61 on the input side, is fitted to a key groove 54 provided at an end portion of the inner rotor 32 on the counter-input side, and transmits the rotation force between the inner rotor 32 and the spool shaft 61. More specifically, a portion of the spool shaft 61 that is on the input side with respect to the spool 6 is configured to move in the axial direction, and as the spool shaft 61 comes into contact with or is separated from the inner rotor 32, a state in which the key member 52 and the key groove 54 are fitted to each other or a state in which the fitting is released can be obtained.

In the clutch 5 having the above configuration, as shown in Figs. 3A and 3B, in a normal state (OFF state) in which the clutch lever 53 is not operated, the clutch magnets 51 and the inner pole magnets 32b face each other with polarities different from each other in the axial direction. Therefore, an attraction force acts between the clutch magnets 51 and the inner pole magnets 32b to cause the clutch magnets 51 to approach the inner pole magnets 32b, and the key member 52 and the key groove 54 are fitted to each other to enter the connected state in which the speed change mechanism 3 and the spool 6 are connected to each other.

In this connected state, when the user operates (turns on) the clutch lever 53, as shown in Figs. 4A and 4B, the clutch magnets 51 rotate by one pole pitch, and the polarity positions thereof in the circumferential direction are reversed. Then, the clutch magnets 51 and the inner pole magnets 32b enter a state in which the same poles thereof face each other in the axial direction to apply a repulsive force to each other. As a result, the spool shaft 61 moves to the counter-input side such that the clutch magnets 51 are separated from the inner pole magnets 32b, and the fitting between the key member 52 and the key groove 54 is released to enter the disconnected state in which the connection between the speed change mechanism 3 and the spool 6 is released.

The rotation direction of the clutch magnets 51 in this case is preferably a direction in which the rotation of the inner rotor 32 is restrained by the one-way clutch 23. Consequently, a situation in which the inner rotor 32 (inner pole magnets 32b) is dragged and rotated due to the rotation of the clutch magnets 51 can be avoided. In addition, the clutch 5 is not limited to the above-described configuration and need only be configured such that the inner rotor 32 of the speed change mechanism 3 and the spool 6 can be connected to each other by a magnetic force. For example, the shaft 32a of the inner rotor 32 in which the key groove 54 is formed may move in the axial direction at the time of connection and disconnection, instead of the spool shaft 61 including the key member 52.

### [Operation of Reel Device]

Figs. 5A to 5C are diagrams illustrating operations of the reel device 1.

In the reel device 1, in a case where the fishing line (line) L is wound, as shown in Fig. 5A, when the user rotates the handle 2, the outer rotor 31 of the speed change mechanism 3 connected to the handle 2 also rotates in the same direction. When the outer rotor 31 rotates, a rotation torque is transmitted to the inner rotor 32 while the spatial magnetic flux waveform of the outer pole magnets 31a is modulated by the magnetic pole pieces 33a of the stator 33 (the rotations are in opposite directions). In this case, the gear ratio is the number of outer pole pairs/ the number of inner pole pairs, resulting in an increase in speed in the present embodiment. Then, the spool 6 connected to the inner rotor 32 via the clutch 5 also rotates in the same direction as the inner rotor 32, and the fishing line L is wound at an increased rotation.

In addition, in a case where the fishing line L is forcibly pulled out from the spool 6 because of a strong pull of a fish or the like, as shown in Fig. 5B, the spool 6 rotates in an opposite direction to that during line winding, and the inner rotor 32 connected to the spool 6 also rotates in the same direction. The outer rotor 31 also attempts to rotate in the opposite direction to that during line winding with the rotation of the inner rotor 32, but the handle 2 is restrained from rotating by the one-way clutch 23. Therefore, the outer rotor 31 connected to the handle 2 also cannot rotate. As a result, the inner rotor 32 is out of step and rotates independently of the outer rotor 31, and the drag is started. In this way, as shown in Fig. 5C, the fishing line L is pulled out from the spool 6, and the drag is performed.

In addition, in the speed change mechanism 3, when the user rotates the drag screw 34, the inner pole magnets 32b move in the axial direction. This can change an axial length (that is, a torque transmission area) in which the inner pole magnets 32b, the outer pole magnets 31a, and the magnetic pole pieces 33a overlap each other, thereby adjusting the step-out torque and consequently, the drag force (the tension of the fishing line L during drag).

When the drag force is adjusted, the outer rotor 31 or the stator 33 may be moved in the axial direction, instead of the inner rotor 32 (inner pole magnets 32b). That is, the speed change mechanism 3 need only be configured such that at least one of the stator 33, the outer rotor 31, and the inner rotor 32 is movable in the axial direction. However, in terms of generating a larger torque change with a smaller amount of movement, it is more preferable to move the stator 33.

### [Technical Effect of the Present Embodiment]

As described above, according to the present embodiment, the rotation force input to the handle 2 is transmitted to the spool 6 by being changed in speed through magnetic modulation in the speed change mechanism 3.

Consequently, power (torque) can be transmitted from the handle 2 to the spool 6 in a non-contact manner. Therefore, power loss at a contact portion that has occurred in a mechanical (contact-type) torque transmission mechanism and a change in characteristics due to a contact state can be suppressed. In addition, the amount of maintenance that has been conventionally required in order to suppress these issues can also be significantly reduced. Therefore, the rotation torque can be suitably transmitted.

Further, in the mechanical bait reel, there is a case where a so-called "clutch kickback" occurs in which the handle rotates due to some factors to connect the clutch during line release, such as during lure casting. This is a phenomenon in which the clutch suddenly kicks back during high-speed rotation of the spool, and the main gear (speed change mechanism) meshes. When this phenomenon occurs, an impact load is applied to the main gear, the clutch, and the one-way clutch, which may lead to malfunction due to deformation or the like, and in the worst case, the operation may be disabled. In this regard, the main gear (speed change mechanism 3) of the magnetic modulation method of the present embodiment performs non-contact power transmission and has a torque limit function. Therefore, even in a case where the clutch kickback occurs, the probability of a failure is low.

In addition, according to the present embodiment, drag can be performed by the step-out between the outer rotor 31 connected to the handle 2 and the inner rotor 32 connected to the spool 6.

Consequently, it is possible to suppress a change in the drag force as compared with the friction-type drag. In general, factors causing the fluctuation of the drag force include, in addition to aging change and the environmental dependence, the rotational speed of the spool 6, the frictional heat caused by the continuous pulling out of the fishing line L, and the like. In addition, the bait reel is generally considered to have a structure in which the position of the drag is far from the spool shaft, and the drag operation performance is lower than that of a spinning reel. That is, the bait reel in which the drag is provided via the main gear (speed change mechanism) from the spool is considered to have a lower drag operation performance (it is difficult to obtain a good torque limit function because of the entry of external disturbance factors such as the main gear or the clutch) than that of the spinning reel in which the drag is provided immediately below the spool shaft.

In addition, according to the present embodiment, the speed change mechanism 3 is configured such that at least one of the stator 33, the outer rotor 31, and the inner rotor 32 is movable in the axial direction.

As a result, the torque transmission area in the speed change mechanism 3 can be changed, thereby adjusting the step-out torque, and consequently the drag force.

In addition, according to the present embodiment, in a case where the spool 6 winds the fishing line L, the outer rotor 31 and the inner rotor 32 rotate in opposite directions to each other.

As a result, the reel device 1 can be used with the usability similar to that of the conventional bait reel in which the handle and the spool are connected to each other by a mechanical gear.

In addition, according to the present embodiment, the handle 2, the speed change mechanism 3, and the spool 6 have the center axes Ax coinciding with each other, that is, the rotation center axes located on the same straight line.

Consequently, unlike the conventional bait reel in which the rotation center axes of the handle and the spool are parallel but shifted because of the mechanical gear interposed therebetween, the rotation torque can be suitably transmitted from the handle 2 to the spool 6. That is, in the conventional bait reel, the rotation force to the handle by the user easily generates a moment for rotating the reel itself around the rotation center axis of the spool, whereas in the reel device 1 of the present embodiment, the generation of such a moment can be suppressed. Therefore, the user can easily apply a force to the handle 2 and can suitably wind the fishing line L.

### [First Modification Example]

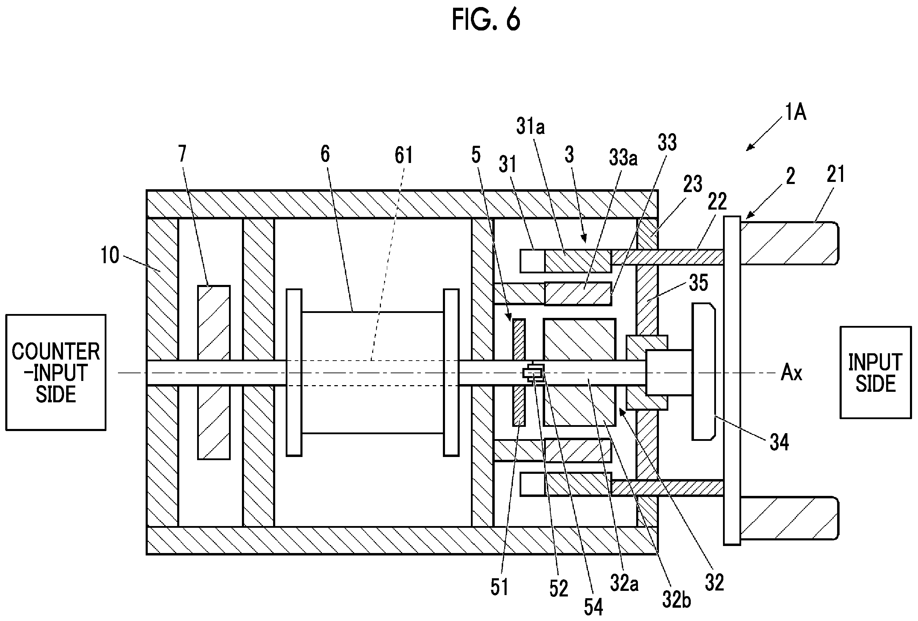

Fig. 6 is a cross-sectional view schematically showing a reel device 1A according to a first modification example of the above-described embodiment.

As shown in the drawing, the reel device 1A according to the present modification example is different from the reel device 1 of the above-described embodiment in that the outer rotor 31 and the inner rotor 32 are connected to each other by a second one-way clutch 35.

The second one-way clutch 35 is provided between the arm 22 of the handle 2 fixed to the outer rotor 31 and the shaft 32a of the inner rotor 32. The second one-way clutch 35 is an example of the one-way clutch according to the present invention and is configured to allow the outer rotor 31 and the inner rotor 32 to rotate in opposite directions in a case where the inner rotor 32 rotates in a direction in which the spool 6 winds the fishing line L, and to restrain both the outer rotor 31 and the inner rotor 32 to rotate the outer rotor 31 and the inner rotor 32 in the same direction in a case where the inner rotor 32 rotates in a direction in which the spool 6 unwinds the fishing line L.

The second one-way clutch 35 need only allow the outer rotor 31 and the inner rotor 32 to rotate in a case of rotating in opposite directions to each other, and restrain both the outer rotor 31 and the inner rotor 32 in a case of rotating in the same direction.

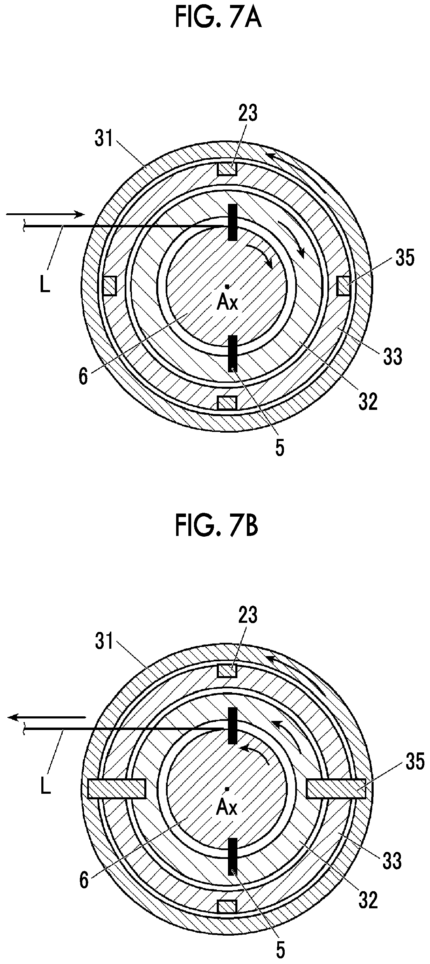

Figs. 7A and 7B are diagrams illustrating operations of the reel device 1A.

In the reel device 1A, in a case where the fishing line (line) L is wound, as shown in Fig. 7A, when the user rotates the handle 2, the spool 6 rotates in the opposite direction to that of the handle 2, and the fishing line L is wound in the same manner as in the above-described embodiment.

In this case, since the outer rotor 31 and the inner rotor 32 rotate in opposite directions to each other, the rotation is not restrained by the second one-way clutch 35.

On the other hand, in a case where the fishing line L is forcibly pulled out from the spool 6, as shown in Fig. 7B, the spool 6 rotates in the opposite direction to that during line winding, and the inner rotor 32 connected to the spool 6 also rotates in the same direction. Then, the inner rotor 32 is out of step, and the drag is started.

In this case, the outer rotor 31 is restrained with respect to the inner rotor 32 by the second one-way clutch 35 and rotates in the same direction as the inner rotor 32. Therefore, the position of the stator 33 is displaced relative to the outer rotor 31 and the inner rotor 32. As a result, the step-out torque (that is, the drag force) can be increased as compared with a case where only the inner rotor 32 is out of step as in the above-described embodiment.

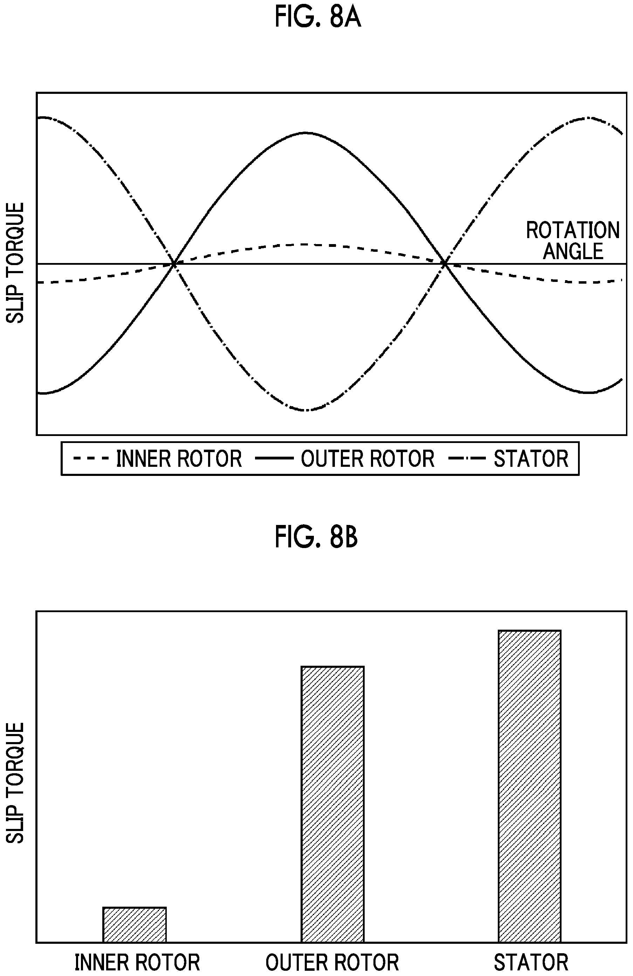

This point will be described in more detail. Fig. 8A is a diagram showing a slip torque (step-out torque) waveform example of the outer rotor 31, the inner rotor 32, and the stator 33 in a case where the stator 33 is forcibly rotated, and Fig. 8B is a diagram in which torque peak values in this case are compared with each other.

As shown in the drawings, since the inner rotor 32 is increased in speed, the slip torque of the inner rotor 32 is relatively small. On the other hand, the slip torque of the outer rotor 31 and the stator 33 is larger by the reduction ratio as compared with that of the inner rotor 32, and the slip torque of the stator 33 is the largest. Therefore, restraining and rotating the outer rotor 31 and the inner rotor 32 equivalently results in a state in which only the stator 33 is rotated, thereby increasing the slip torque and consequently, the drag force.

In addition, since the outer rotor 31 and the inner rotor 32 are restrained by the second one-way clutch 35 during drag, halting the rotation of the handle 2 during drag can stop the pulling out of the fishing line L.

As described above, according to the first modification example, the second one-way clutch 35 connecting the outer rotor 31 and the inner rotor 32 restrains both the outer rotor 31 and the inner rotor 32 and rotates the outer rotor 31 and the inner rotor 32 in the same direction in a case where the inner rotor 32 rotates in the direction in which the spool 6 unwinds the fishing line L.

As a result, it is possible to increase the step-out torque as compared with a case where only the inner rotor 32 is out of step, and consequently, it is possible to increase the drag force.

### [Second Modification Example]

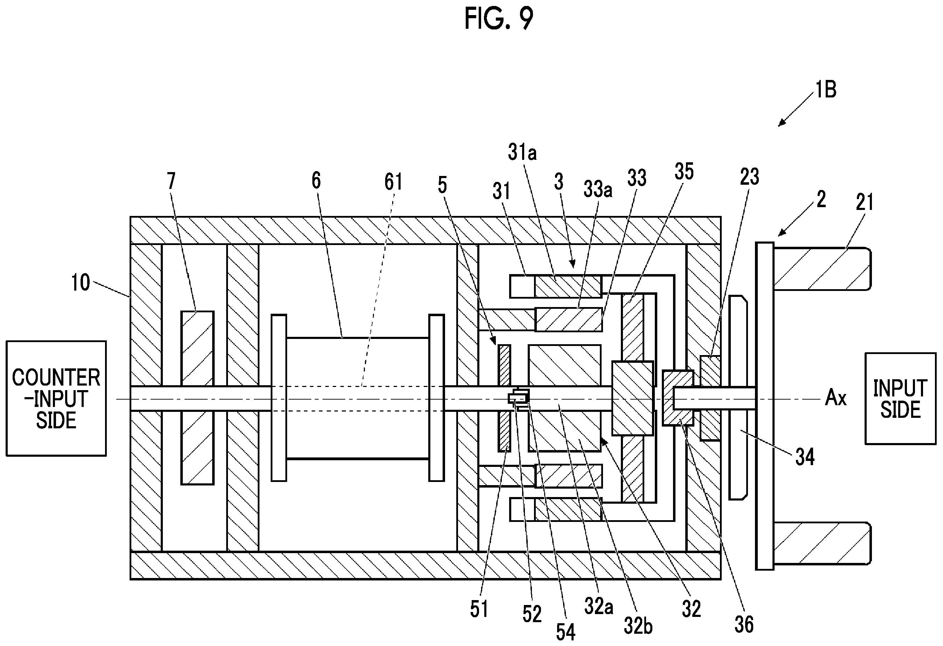

Fig. 9 is a cross-sectional view schematically showing a reel device 1B according to a second modification example of the above-described embodiment.

As shown in the drawing, the reel device 1B according to the present modification example is different from the reel device 1A of the above-described first modification example in that a friction-type second clutch 36 that connects the handle 2 and the outer rotor 31 to each other is provided.

The second clutch 36 integrally rotates the handle 2 and the outer rotor 31 in a case where a restraining torque is less than a predetermined value, and relatively rotates (slips) the handle 2 and the outer rotor 31 in a case where the restraining torque is equal to or greater than the predetermined value. Note that this function need only be obtained during rotating in the direction in which the spool 6 unwinds the fishing line L.

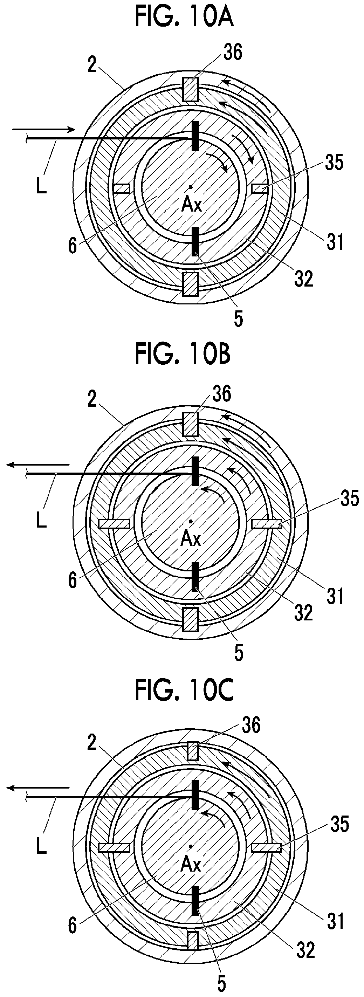

Figs. 10A to 10C are diagrams illustrating operations of the reel device 1B.

In the reel device 1B, in a case where the fishing line (line) L is wound, as shown in Fig. 10A, when the user rotates the handle 2, the spool 6 rotates in the opposite direction to that of the handle 2, and the fishing line L is wound in the same manner as in the above-described embodiment.

On the other hand, in a case where the fishing line L is forcibly pulled out from the spool 6, as shown in Fig. 10B, the spool 6 rotates in the opposite direction to that during line winding, and the inner rotor 32 connected to the spool 6 also rotates in the same direction. Then, the inner rotor 32 is out of step, and the drag is started.

In this case, the outer rotor 31 is restrained with respect to the inner rotor 32 by the second one-way clutch 35 and rotates in the same direction as the inner rotor 32. Therefore, only the stator 33 is relatively rotated, and the step-out torque (that is, the drag force) is increased.

When the user stops the rotation of the handle 2 during drag, as shown in Fig. 10C, it does not lead to a line lock, and the handle 2 and the outer rotor 31 slip through the second clutch 36. As a result, a frictional drag force at the second clutch 36 can be obtained, similar to the conventional drag. However, the torque is limited to a torque equal to or less than the step-out torque.

As described above, according to the second modification example, the handle 2 and the outer rotor 31 are connected to each other via the friction-type second clutch 36 that slips at a predetermined torque.

As a result, a frictional drag force at the second clutch 36 can be obtained, similar to the conventional drag. In addition, restraining the rotation of the handle 2 during drag does not lead to the line lock.

### [Third Modification Example]

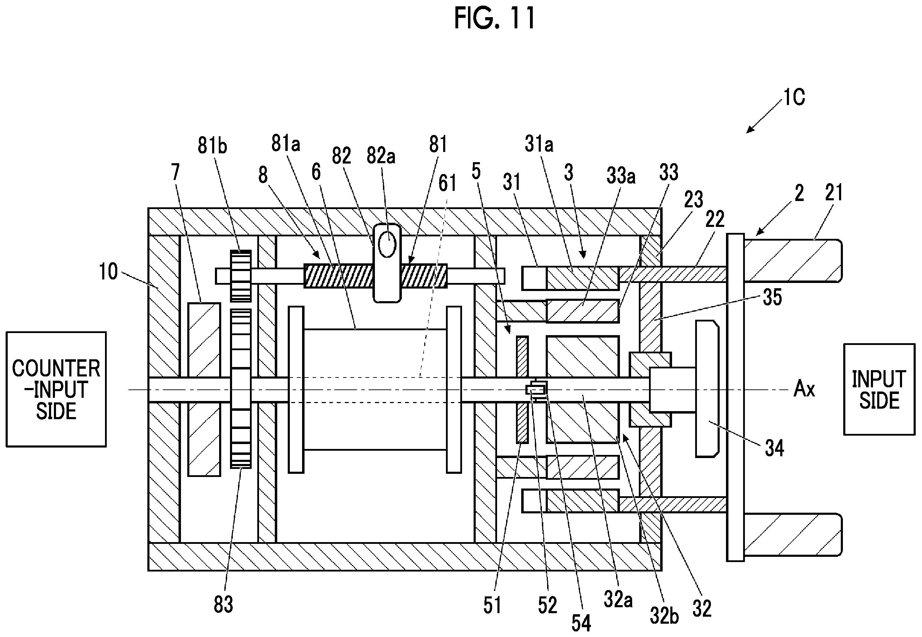

Fig. 11 is a cross-sectional view schematically showing a reel device 1C according to a third modification example of the above-described embodiment.

As shown in the drawing, the reel device 1C according to the present modification example is different from the reel device 1 of the above-described embodiment in that a level wind mechanism (level winder) 8 is provided.

The level wind mechanism 8 winds the fishing line L around the spool 6 while moving the fishing line L to left and right (in the axial direction), thereby uniformly winding the fishing line L around the spool 6. Specifically, the level wind mechanism 8 includes a worm shaft 81, a moving member 82, and a drive gear 83.

The worm shaft 81 is disposed on the outer diameter side of the spool 6 in a state of extending parallel to the center axis Ax and is rotatably supported by the frame 10. A gear 81a is formed in a portion of the worm shaft 81 that corresponds to the spool 6. In addition, a pinion gear 81b is provided at an end portion of the worm shaft 81 on the counter-input side.

The moving member 82 meshes with the gear 81a of the worm shaft 81 and is provided to reciprocate in the axial direction with the rotation of the worm shaft 81. The moving member 82 includes a through-hole 82a for guiding the fishing line L.

The drive gear 83 is integrally provided on the spool shaft 61 and meshes with the pinion gear 81b of the worm shaft 81.

In the level wind mechanism 8 having the above configuration, since the drive gear 83 that rotates integrally with the spool 6 with the rotation of the spool 6 meshes with the pinion gear 81b, the worm shaft 81 also rotates. When the worm shaft 81 rotates, the moving member 82 reciprocates in the axial direction, and the fishing line L inserted through the through-hole 82a is also wound around (or unwound from) the spool 6 while moving in the axial direction.

The level wind mechanism 8 is not limited to the above-described structure, and a structure of the same mechanism conventionally known can be applied. In addition, the level wind mechanism 8 of the present modification example can be suitably applied to not only the above-described embodiment but also other modification examples.

In addition, the level wind mechanism 8 may have a structure in which a driving force (a rotation force of the worm shaft 81) is transmitted in a non-contact manner.

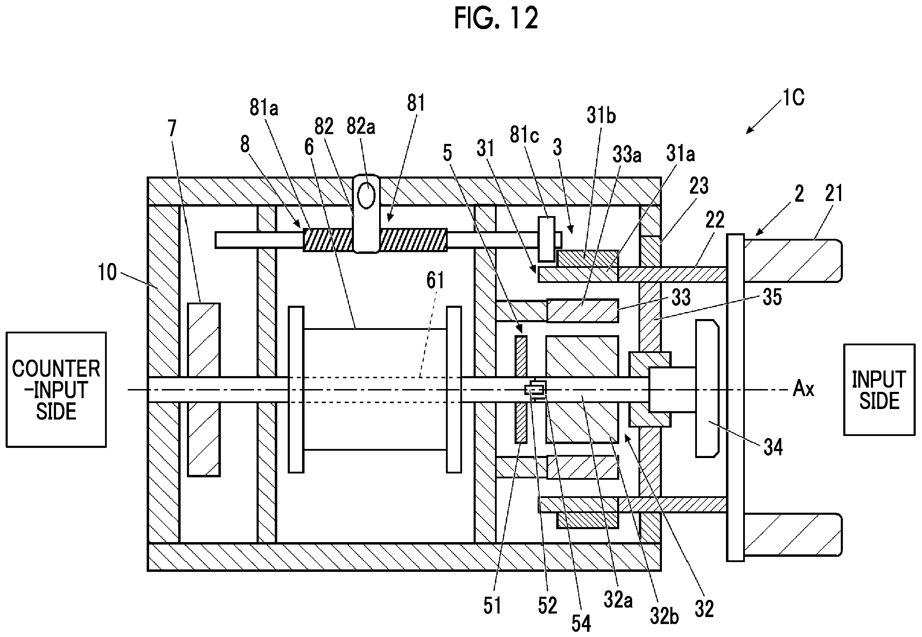

Specifically, as shown in Fig. 12, a worm shaft magnet 81c need only be provided instead of the pinion gear 81b and the drive gear 83.

The worm shaft magnet 81c is formed in a disc-like shape coaxial with the worm shaft 81, is provided at an end portion of the worm shaft 81 on the input side, and is disposed to face the outer diameter side of the outer pole magnets 31a of the outer rotor 31 with a predetermined gap therebetween. The end portion of the outer pole magnets 31a of the outer rotor 31 on the counter-input side face the worm shaft magnet 81c in the radial direction, and the other portions of the outer pole magnets 31a are supported by a yoke 31b.

The worm shaft magnet 81c includes a plurality of magnets (not shown) alternately disposed in the circumferential direction with different polarities and is magnetically connected to the outer pole magnets 31a of the outer rotor 31. Therefore, the worm shaft 81 rotates with the rotation of the outer rotor 31, and the moving member 82 moves. As a result, the level wind mechanism 8 can be operated.

The worm shaft 81 is not limited to the above-described configuration and need only be configured to rotate by a magnetic force with the rotation of the outer rotor 31.

### [Other Configurations]

The embodiments of the present invention have been described above, but the present invention is not limited to the above-described embodiments.

For example, in the above-described embodiments and modification examples, the reel device for fishing has been described as an example. However, the reel device according to the present invention is not limited to fishing purposes and can be widely applied to all the reel devices that wind and unwind a line-like body. The line-like body to be wound around the reel device is not limited to the fishing line and widely includes line-like bodies such as a wire.

In addition, the reel device according to the present invention is also applicable to an electric reel.

Further, in the above-described embodiments, the clutch 5 is configured to connect the speed change mechanism 3 and the spool 6 to each other by using a magnetic force, but the clutch 5 may be a conventional mechanical (friction-type) clutch.

Furthermore, it is preferable that each portion (particularly, a magnet or a magnetic pole piece of each portion) of the reel device 1 is subjected to a waterresistant coating for suppressing corrosion caused by water (particularly, seawater).

In addition, the details described in the above-described embodiments can be appropriately changed without departing from the scope of the invention defined by the appended claims.

### Industrial Applicability

As described above, the present invention is useful for suitably transmitting a rotation torque.

### Reference Signs List

- 1, 1A, 1B, 1C: reel device
- 2: handle (rotation input portion)
- 23: one-way clutch
- 3: speed change mechanism
- 31: outer rotor (input shaft)
- 31a: outer pole magnet
- 32: inner rotor (output shaft)
- 32b: inner pole magnet
- 33: stator
- 33a: magnetic pole piece
- 34: drag screw
- 35: second one-way clutch
- 36: second clutch
- 5: clutch
- 51: clutch magnet
- 6: spool (line winding portion)
- 61: spool shaft
- 8: level wind mechanism
- 81: worm shaft (shaft)
- 81c: worm shaft magnet
- 82: moving member
- 10: frame (casing)
- Ax: center axis
- L: fishing line (line-like body)

## Claims

1. A double bearing reel for fishing comprising:
a rotation input portion (2) to which a rotation force is input by a user;
a line winding portion (6) that is rotatably supported and around which a line-like body is wound; and
a speed change mechanism (3) that is capable of transmitting the rotation force input to the rotation input portion (2) to the line winding portion (6) by changing a speed at a predetermined gear ratio through magnetic modulation,
said double bearing reel for fishing being **characterized in that** the speed change mechanism (3) includes
a stator (33) that includes a plurality of magnetic pole pieces (33a) arranged in a circumferential direction and is fixed to a casing,
an outer rotor (31) that is disposed on an outer diameter side of the stator (33) and includes a plurality of outer pole magnets (31a) arranged in the circumferential direction, and
an inner rotor (32) that is disposed on an inner diameter side of the stator (33) and includes a plurality of inner pole magnets (32b) arranged in the circumferential direction,
the outer rotor (31) is connected to the rotation input portion (2), and
the inner rotor (32) is connected to the line winding portion (6).

2. The double bearing reel for fishing according to claim 1,
wherein the rotation input portion (2), the line winding portion (6), and the speed change mechanism (3) have rotation center axes located on the same straight line.

3. The double bearing reel for fishing according to claim 1 or 2, further comprising:
a clutch (5) that connects the inner rotor (32) of the speed change mechanism (3) and the line winding portion (6) to each other by using a magnetic force.

4. The double bearing reel for fishing according to claim 1,
wherein the speed change mechanism (3) is configured such that at least one of the stator (33), the outer rotor (31), and the inner rotor (32) is movable in an axial direction.

5. The double bearing reel for fishing according to claim 1 or 4,
wherein the speed change mechanism (3) rotates the outer rotor (31) and the inner rotor (32) in opposite directions to each other in a case where the line winding portion (6) winds the line-like body.

6. The double bearing reel for fishing according to any one of claims 1, 4, and 5, further comprising:
a one-way clutch (23) that connects the outer rotor (31) and the inner rotor (32) to each other,
wherein the one-way clutch (23) restrains both the outer rotor (31) and the inner rotor (32) and rotates the outer rotor (31) and the inner rotor (32) in the same direction in a case where the inner rotor (32) rotates in a direction in which the line winding portion (6) unwinds the line-like body.

7. The double bearing reel for fishing according to claim 5,
wherein the rotation input portion (2) and the outer rotor (31) are connected to each other via a friction-type second clutch that slips at a predetermined torque.

8. The double bearing reel for fishing according to any one of claims 1 to 7, further comprising:
a level wind mechanism (8) that includes a shaft disposed along an axial direction on an outer diameter side of the line winding portion (6), and a moving member (82) that guides the line-like body while reciprocating in the axial direction along the shaft.

9. The double bearing reel for fishing according to claim 8,
wherein the speed change mechanism (3) includes the outer rotor (31) that includes the plurality of outer pole magnets (31a) arranged in the circumferential direction,
the shaft is configured to rotate by a magnetic force with rotation of the outer rotor (31), and
a worm shaft magnet (81c) is provided to face an outer diameter side of the outer pole magnets (31a) of the outer rotor (31) with a predetermined gap therebetween.

## Patentansprüche

1. Doppel-Lagerrolle für Fischfang, umfassend:
einen Dreheingabeabschnitt (2), in den eine Drehkraft von einem Benutzer eingegeben wird;
einen Schnurwickelabschnitt (6), der drehbar gelagert ist und um den ein schnurartiger Körper gewickelt wird; und
einen Geschwindigkeitsänderungsmechanismus (3), der in der Lage ist, die Drehkraft, die in den Dreheingabeabschnitt (2) eingegeben wird, auf den Schnurwickelabschnitt (6) durch Ändern einer Geschwindigkeit bei einem vorbestimmten Übersetzungsverhältnis durch magnetische Modulation zu übertragen,
wobei die Doppel-Lagerrolle für Fischfang **dadurch gekennzeichnet ist, dass** der Geschwindigkeitsänderungsmechanismus (3) aufweist
einen Stator (33), der mehrere Magnetpolstücke (33a), die in einer Umfangsrichtung ausgerichtet sind, aufweist und an einem Gehäuse befestigt ist,
einen Außenrotor (31), der auf einer Außendurchmesserseite des Stators (33) angeordnet ist und mehrere Außenpolmagnete (31a), die in der Umfangsrichtung ausgerichtet sind, aufweist, und
einen Innenrotor (32), der auf einer Innendurchmesserseite des Stators (33) angeordnet ist und mehrere Innenpolmagnete (32b), die in der Umfangsrichtung ausgerichtet sind, aufweist,
wobei der Außenrotor (31) mit dem Dreheingabeabschnitt (2) verbunden ist und
der Innenrotor (32) mit dem Schnurwickelabschnitt (6) verbunden ist.

2. Doppel-Lagerrolle für Fischfang nach Anspruch 1,
wobei der Dreheingabeabschnitt (2), der Schnurwickelabschnitt (6) und der Geschwindigkeitsänderungsmechanismus (3) Drehmittelachsenaufweisen, die sich auf derselben geraden Linie befinden.

3. Doppel-Lagerrolle für Fischfang nach Anspruch 1 oder 2, ferner umfassend:
eine Kupplung (5), die den Innenrotor (32) des Geschwindigkeitsänderungsmechanismus (3) und den Schnurwickelabschnitt (6) unter Verwendung einer Magnetkraft miteinander verbindet.

4. Doppel- Lagerrolle für Fischfang nach Anspruch 1,
wobei der Geschwindigkeitsänderungsmechanismus (3) so konfiguriert ist, dass mindestens einer von dem Stator (33), dem Außenrotor (31) und dem Innenrotor (32) in einer Axialrichtung beweglich ist.

5. Die Doppel-Lagerrolle für Fischfang nach Anspruch 1 oder 4,
wobei der Geschwindigkeitsänderungsmechanismus (3) den Außenrotor (31) und den Innenrotor (32) in entgegengesetzte Richtungen zueinander dreht, in einem Fall, bei dem der Schnurwickelabschnitt (6) den schnurartigen Körper aufwickelt.

6. Doppel-Lagerrolle für Fischfang nach einem der Ansprüche 1, 4 und 5, ferner umfassend:
einen Freilauf (23), der den Außenrotor (31) und den Innenrotor (32) miteinander verbindet,
wobei der Freilauf (23) sowohl den Außenrotor (31) als auch den Innenrotor (32) begrenzt und den Außenrotor (31) und den Innenrotor (32) in dieselbe Richtung dreht, in einem Fall, bei dem der Innenrotor (32) in eine Richtung dreht, in der der Schnurwickelabschnitt (6) den schnurartigen Körper abwickelt.

7. Doppel-Lagerrolle für Fischfang nach Anspruch 5,
wobei der Dreheingabeabschnitt (2) und der Außenrotor (31) via eine zweite Kupplung vom Reibungstyp miteinander verbunden sind, die bei einem vorbestimmten Drehmoment rutscht.

8. Doppel-Lagerrolle für Fischfang nach einem der Ansprüche 1 bis 7, ferner umfassend:
einen Stufenwickelmechanismus (8), der eine Welle aufweist, die entlang einer Axialrichtung auf einer Außendurchmesserseite des Schnurwickelabschnitts (6) angeordnet ist, und ein bewegliches Element (82), das den schnurartigen Körper führt, während es sich in der Axialrichtung entlang der Welle hin- und herbewegt.

9. Doppel-Lagerrolle für Fischfang nach Anspruch 8,
wobei der Geschwindigkeitsänderungsmechanismus (3) den Außenrotor (31) aufweist, der mehrere Außenpolmagnete (31a), die in Umfangsrichtung ausgerichtet sind, aufweist,
die Welle so konfiguriert ist, dass sie sich durch eine Magnetkraft bei Drehung des Außenrotors (31) dreht, und
ein Schneckenwellenmagnet (81c) so vorgesehen ist, dass er einer Außendurchmesserseite der Außenpolmagnete (31a) des Außenrotors (31) mit einem vorbestimmten Spalt dazwischen zugewandt ist.

## Revendications

1. Un moulinet à double roulement pour la pêche comprenant :
une partie d'entrée de rotation (2) à laquelle une force de rotation est appliquée par un utilisateur ;
une partie d'enroulement de ligne (6) qui est supportée de manière rotative et autour de laquelle un corps en forme de ligne est enroulé ; et
un mécanisme de changement de vitesse (3) qui est capable de transmettre la force de rotation appliquée à la partie d'entrée de rotation (2) à la partie d'enroulement de ligne (6) en modifiant une vitesse selon un rapport d'engrenage prédéterminé par modulation magnétique,
ledit moulinet à double roulement pour la pêche étant **caractérisé en ce que** le mécanisme de changement de vitesse (3) comprend
un stator (33) qui comprend une pluralité de pièces polaires magnétiques (33a) disposées dans une direction circonférentielle et est fixé à un carter,
un rotor externe (31) qui est disposé sur un côté de diamètre externe du stator (33) et comprend une pluralité d'aimants polaires externes (31a) disposés dans la direction circonférentielle, et
un rotor interne (32) qui est disposé sur un côté de diamètre interne du stator (33) et comprend une pluralité d'aimants polaires internes (32b) disposés dans la direction circonférentielle,
le rotor externe (31) étant raccordé à la partie d'entrée de rotation (2), et
le rotor interne (32) étant raccordé à la partie d'enroulement de ligne (6).

2. Le moulinet à double roulement pour la pêche selon la revendication 1,
dans lequel la partie d'entrée de rotation (2), la partie d'enroulement de ligne (6) et le mécanisme de changement de vitesse (3) possèdent des axes centraux de rotation situés sur une même ligne droite.

3. Le moulinet à double roulement pour la pêche selon la revendication 1 ou 2, comprenant en outre :
un embrayage (5) qui raccorde le rotor interne (32) du mécanisme de changement de vitesse (3) et la partie d'enroulement de ligne (6) l'un à l'autre à l'aide d'une force magnétique.

4. Le moulinet à double roulement pour la pêche selon la revendication 1,
dans lequel le mécanisme de changement de vitesse (3) est configuré de sorte qu'au moins l'un parmi le stator (33), le rotor externe (31) et le rotor interne (32) est mobile dans une direction axiale.

5. Le moulinet à double roulement pour la pêche selon la revendication 1 ou 4,
dans lequel le mécanisme de changement de vitesse (3) fait tourner le rotor externe (31) et le rotor interne (32) dans des directions opposées l'un par rapport à l'autre dans le cas dans lequel la partie d'enroulement de ligne (6) enroule le corps en forme de ligne.

6. Le moulinet à double roulement pour la pêche selon l'une quelconque des revendications 1, 4 et 5, comprenant en outre :
un embrayage unidirectionnel (23) qui raccorde le rotor externe (31) et le rotor interne (32) l'un à l'autre,
dans lequel l'embrayage unidirectionnel (23) retient à la fois le rotor externe (31) et le rotor interne (32) et fait tourner le rotor externe (31) et le rotor interne (32) dans la même direction dans le cas dans lequel le rotor interne (32) tourne dans une direction dans laquelle la partie d'enroulement de ligne (6) déroule le corps en forme de ligne.

7. Le moulinet à double roulement pour la pêche selon la revendication 5,
dans lequel la partie d'entrée de rotation (2) et le rotor externe (31) sont raccordés l'un à l'autre via un deuxième embrayage de type à friction qui patine à un couple prédéterminé.

8. Le moulinet à double roulement pour la pêche selon l'une quelconque des revendications 1 à 7, comprenant en outre :
un mécanisme de guidage de ligne (8) qui comprend un arbre disposé selon une direction axiale sur un côté de diamètre externe de la partie d'enroulement de ligne (6), et un élément mobile (82) qui guide le corps en forme de ligne tout en effectuant un mouvement de va-et-vient dans la direction axiale le long de l'arbre.

9. Le moulinet à double roulement pour la pêche selon la revendication 8,
dans lequel le mécanisme de changement de vitesse (3) comprend le rotor externe (31) qui comprend la pluralité d'aimants polaires externes (31a) disposés dans la direction circonférentielle,
l'arbre est configuré pour tourner grâce à une force magnétique avec la rotation du rotor externe (31), et
un aimant d'arbre de vis sans fin (81c) étant prévu pour faire face à un côté de diamètre externe des aimants polaires externes (31a) du rotor externe (31) avec un interstice prédéterminé entre eux.
